(19) Europäisches Patentamt
European Patent Office
Office européen des brevets

(11) Publication number: 0 192 047
A2

(12) # EUROPEAN PATENT APPLICATION

(21) Application number: 86100567.6

(22) Date of filing: 17.01.86

(51) Int. Cl.[4]: B 24 D 3/32

(30) Priority: 22.02.85 US 704121

(43) Date of publication of application:
27.08.86 Bulletin 86/35

(84) Designated Contracting States:
DE FR GB IT

(71) Applicant: International Business Machines Corporation
Old Orchard Road
Armonk, N.Y. 10504(US)

(72) Inventor: Chen Shyan Shen, John
545-21 Street
NE-Rochester MN 55904(US)

(74) Representative: Colas, Alain
Compagnie IBM France Département de Propriété Industrielle
F-06610 La Gaude(FR)

(54) Fixed abrasive polyurethane grinding media.

(57) A fixed abrasive grinding media is disclosed which includes a high open cell content polyurethane foam binder in which is dispersed a high concentration, from 50 to 70% by weight, of abrasive particles. The binder system includes one or two hydrophilic polyols; an low molecular weight, highly reactive isocyanate; a surfactant that controls open cell formation; water and dual catalysts. One catalyst promotes the isocyanate-water reaction and the other promotes only the isocyanate-polyol reaction.

EP 0 192 047 A2

Croydon Printing Company Ltd.

# FIXED ABRASIVE POLYURETHANE GRINDING MEDIA

This invention relates to grinding media and more particularly to a fixed abrasive grinding media composition adapted for the surface finishing of rigid magnetic disk substrates.

As magnetic recording track densities and bit densities increase, it is necessary to enhance the precision of the accessing and transducing mechanisms including a reduction of the transducer head fly height. As the fly height is reduced, signal output is enhanced; however, lower fly height characteristics are unavailing if the cooperating storage media does not achieve similar higher levels of performance such as flatness and a scratch free magnetic media surface. In a high recording density magnetic media, such as 130 to 320 megabits per square centimeter (20 to 50 megabits per square inch), the substrate and magnetic coating must have thickness irregularities of less than 0,05 micron from inner layer to outer layer and the surface finish must have irregularities no greater than 0,01 micron. These requirements prevent conventional grinding media from meeting the performance criteria.

In the prior art, grinding media have been developed beyond the scope of natural abrasive stones. It is know to incorporate abrasive particles in polymeric substances. For example, US-A 4.138.228 discloses a fixed abrasive polishing media comprising a flexible backing overcoated with a microporous sponge-like polymer coating having abrasive particles with an average size of less than 10 microns embedded therein. This media does provide a smooth superfinished surface. Unfortunately, the soft characteristic of this media prevents mechanical stock removal and fails to achieve the surface flatness required for rigid magnetic recording disk media.

US-A 3.959.935 discloses a grinding pad in which the abrasive particles are fixed in the surface of the pad. This type media is useful for mechanical stock removal, but is unable to produce a scratch-free, flat disk substrate surface. US-A 4.221.572 describes a grinding media comprising a polycarbodiimide and polyurethane resin binder for retaining the abrasive grains. This grinding media has excellent thermal resistance, but does not have the porosity and rigidity required for disk substrate grinding. In an actual grinding environment, this media will wear rapidly and require frequent replacement. US-A 2.885.278 discloses an elastomeric polyurethane bonded abrasive wheel. This media does produce a smooth disk surface, but fails to meet the flatness requirement since the media changes dimension when subjected to the pressure of high speed grinding. US-A 4.049.396 shows a non-foamed elastomeric polyurethane binder in which abrasive particles are fixed. Media of this type does not absorb wetting solution during grinding which results in uneven surface cutting. The wetting ability of a grinding media is important, not only to produce a uniform surface, but also to prevent media wear.

This invention teaches a composition of fixed abrasive grinding media which has demonstrated the capability to produce a flat, smooth and scratch-free magnetic disk substrate surface. In accordance with the present invention, disk substrates are ground using a rigid thermoset, open cell polyurethane foam structure impregnated with 50 to 70 percent abrasive particles having a size ranging from 10 to 35 microns. This fixed abrasive grinding media is used, not with an abrasive slurry, but with a liquid lubricant or wetting solution. The foam matrix is characterized as being rigid, being highly thermosetting, having high abrasive particle loading, having a fine open celled structure and being non-compressible and non-friable. The impregnated foam composition may be used in the form of a block, a wheel or a sheet molded to any desired shape.

The specified fine open celled structure of this grinding media enables it to retain lubricant during grinding and wet the cutting surface thoroughly and uniformly. This media reliably produces a scratch free surface without a further polishing step. Another attribute of the media is the high abrasive particle loading in the rigid thermoset polyurethane binder matrix, which provides aggressive stock removal while achieving the superior flatness required by a high performance magnetic recording disk substrate. Unlike conventional abrasive grinding and polishing media, this grinding media composition will produce a flat, smooth disk substrate surface in a one step operation.

It is an object of this invention to provide a fixed abrasive grinding media composition capable of grinding a wide variety of rigid metal disk substrate surfaces. It is another object of this invention to provide a magnetic disk grinding media capable of producing a flat, smooth, scratch-free disk substrate surface. It is a further object of this invention to provide a grinding media composition which is able to absorb a wetting solution during grinding to produce a uniform cutting surface. It is also an object of this invention to provide a grinding media with a binder capable of capturing all the embedded abrasive particles while uniformly dispersing them throughout the entire crosslinked binder network. It is another object of this invention to provide a grinding media composition which is dimensionally stable under high pressure and high speed rotation. It is still another object of this invention to provide a composition which resists the conventional organo solvents and is non-friable.

## Detailed Description

US-A 4.459.779 discloses the method of preparing an open celled polyurethane abrasive grinding media. It has been found that the composition of the present invention would produce a more effective open celled abrasive grinding media

with or without the preparation technique described in the previous patent.

The fixed abrasive grinding media composition of this invention includes a fine open celled thermoset polyurethane rigid foam in which 50 to 70 percent by weight of abrasive particles are uniformly dispersed. The binder system of this invention comprises one or two hydrophilic polyols, a low molecular weight high reactive polyisocyanate, a surfactant that controls the size of cell structure, a water blowing agent and dual catalysts; one catalyst promotes only the isocyanate-water reaction and other promotes only the polyurethane formation.

The abrasive particles may, for example, be aluminum oxides, silicon oxide, silicon dioxide, silicon carbide, granite, limestone or other stone chips. It may also be diamond, corundum, silica and the like. Suitable synthetic abrasive powders are diamond, boron nitride, tantalum carbide, tungsten carbide and metal abrasives.

In selecting the abrasive particle, not only the size and hardness, but also the compatibility with the binder must be considered. Aluminum oxide and silicon carbide are preferred, according to the present invention. Since the object of this invention is to grind a high pure aluminum alloy, it is important that the abrasive particles be captured as a fixed abrasive by the binder and gradually disintegrate during the grinding process rather than break away from binder. It was discovered that the mixture of aluminum oxide and silicon carbide particles produced the best binding strength with the binder system and therefor, completely eliminated the possibility of particles breaking away and becoming embedded in the finished disk surfaces. Another advantage of blending aluminum oxide with silicon carbide is the ability to perform cutting and smoothing of the surface simultaneously during the process.

The abrasive should have a particle size between 10 to 35 microns. A particle size less than 10 microns results in slow cutting action and is thus economically less practical. Over size particles produce an undesirable surface finish which requires a further polishing step.

With regard to the hardness of the abrasive, a hardness of at least 7 on the Mohs Hardness Scale is suitable for this invention. However a Mohs Hardness of 9 is preferred. Moreover, the range of hardness selection of the mixed abrasive can be made with respect to the concentration. The best result in the present invention has been obtained using a 50/50 mixture of aluminum oxide and silicon carbide.

In the present invention, the binder composition includes a thermoset polyurethane in which abrasive particles are dispersed and which can form a rigid cellulose material with an open cell, microporous structure under desirable cure conditions. The binder may include catalysts, surfactant, blowing agent and additives to enhance the properties of the binder. Furthermore, all the binders should be in a liquid form at room temperature and contain no reactive solvents.

The polyisocyanate used in the binder of the present invention has an average molecular weight of 500 to 1000 and contains at least two reactive -NCO sites. For the purposes of this invention, the term "isocyanate" is represented by the formula:

$$R-(NCO)z$$

Wherein R is a polyvalent organic radical which is preferably an aromatic or aromatic/aliphatic polymer or mixtures thereof and z is an integer of two or more, preferably z is 2 to 4 most preferably 3.

Illustrative isocyanates suitably employed in the practice of present invention are for example: 2,4-Toluene diisocyanate, mixtures of 2,4- and 2,6-Toluene diisocyanate,

1,3-Bis-(isocyanatomethyl) benzene, polyethylene polyphenyl polyisocyanate, isophorone diisocyanate,
4,4-diisocyanatophenyl methane, 4,2-diisocyanatophenyl methane. Other organic polyisocyanates are the polyisocyanates described in US-A 2.855.385, 2.292.443 and 2.929.794.

The selection of polyols in the binder of the present invention is critical. At least one polyol must be hydrophilic and have a Hygroscopicity value greater than 30. This is a relatively comparative value based on Glycerine as 100. The concentration of hydrophilic polyols should be greater than 10% by weight of total polyols. The preferable hydrophilic polyols are polyethylene glycols and polycaprolactone polyols. The molecular weight and reactivity of polyols are also important, since these attributes control the rigidity of binder system and the wet-ability of abrasive particles. Typically they will exhibit a molecular weight of 1000 to 4000 and have at least two reactive hydroxy groups. Other non-hydrophilic polyols such as polyether or polyester polyol can be used in this invention, but these require a mixture of one or more above hydrophilic polyols. The hydrophilic polyols in the binder of this invention is one of the factors affecting the open cell microporous structure during the reactions.

Most polyurethane systems require the NCO/OH equivalent weight ratio to be in the range of 0,8 to 1,0. In this invention, it is preferable to have excess of polyisocyanate so that the reaction of isocyanate with water can take place. Typically we required an NCO/OH ratio above 1,05 and preferably at 1,2.

Using a catalyst to promote the isocyanate/polyol or isocyanate/water reaction in the formation of polyurethane foam has been known for many years. However, when both reactions are involved, the selection of catalysts becomes an important key in controlling the overall microcell foam structure. It was discovered that if the reactivity of isocyanate/water is slightly greater than isocyanate/polyol

reaction, the resulting polyurethane foam will have high cpen cell content. Therefore, a mixture of two catalysts are used in the binder of the present invention; the first catalyst is used to promote only the isocyanate/polyol reaction while the second catalyst used for promoting the isocyanate/water reaction.

Organo metal catalysts such as stannous octoate, dibutyltin dilaurate, lead octoate, phenylmercuric propionate, zinc chloride are found to be favored in promoting the isocyanate/polyol reaction, while the amine based catalysts of N-methylamine, Dimethylethanolamine, N,N,N',N'-tetramethyl Ethylenediamine, 1,4-Diazabicyclo(2,2,2) octane, triethylamine, dimethylethanolamine and 2,4,6-tris (dimethylaminomethyl) phenol are favored in the isocyanate/water reaction. A mixture of stannous octoate and 1,4-diazabicyclo(2,2,2) octane is preferred in this invention. The mixture ratio can be in the range from 9 to 1 up to 7 to 3 and the total catalysts concentration should not exceed 5 percent of total binder weight.

A silicone surfactant is used as a binder additive in the present invention. It controls the size of cell and also provides a desirable cell structure. As described previously, the open cell structure of this abrasive media has the ability to retain the liquid lubricant and therefore could eliminate the scratches by lowering the surface friction during the grinding process.

There are many commercial silicone surfactants available. However, it has been found that only the silicone oxyethylene copolymers are suitable for this application. Silicone surfactants of the following structure are the most effective additive in producing the best homogeneity of cells and high concentration of open cell:

$$R-O-(-\overset{\displaystyle OH}{\underset{\displaystyle OH}{\overset{|}{\underset{|}{Si}}}}-O-)_x-(CH2-O-CH2CH2-O-)_y-R'$$

While, R and R' are monovalent hydrocarbon radicals of H, CH2OCH2CH3, CH2CH2CH3, and x is an integer number from 10 to 20, y is an integer number of 2 to 10.

The blowing agent used in this formulation is carbon dioxide (CO2) gas rather than the conventional fluorocarbon. The CO2 gas is formed by the reaction of polyisocyanate with water at elevated temperatures and catalyst. Using water to generate the carbon dioxide gas not only controls the density of foam, but also gives a rigidity and non-compressiblity to the media. The water required in the formulation is less than 0,1 percent of total binder weight.

The following are examples of the media composition of this invention: EXAMPLE I

| Ingredient | Parts by Weight |
|---|---|
| Polyisocyanate | 50,0 |
| polyol | 50,0 |
| hydrophilic polyol | 20,0 |
| abrasive particles I | 70,0 |
| abrasive particles II | 70,0 |
| silicone oxyethylene copolymer | 2,0 |
| water | 0,1 |
| catalyst I | 1,0 |
| catalyst II | 0,3 |

The abrasive particles I and II were first dispersed in polyol and hydrophilic polyol using a high speed agitator until a uniform mix was achieved. The above materials are mixed together with surfactant and water for 10 minutes. After introducing the polyisocyanate and catalysts, the material is mixed for 10 seconds and placed in a closed mold which has

been preheated to a temperature in the range of 40 to 70C. The mold is maintained in an oven at a temperature of 150C for 20 minutes. The final abrasive media is rigid and has a density of 0,25 g/cm³ (15 pounds per cubic feet) with an 80 percent open cell content. The open cell content is measured under an air compression pyconmeter. The density of media depends on the mold size and weight of total materials. The preferable density ranges from 10 to 30 pounds per cubic feet.

EXAMPLE II

| Ingredient | Parts by Weight |
|---|---|
| Polyisocyanate | 50,0 |
| PAPI135 (Upjohn) | |
| Polyether polyol | |
| Voranol 360 (Dow) | 50,0 |
| Hydrophilic polyol | |
| Cabowax 1000 (Union Carbide) | 15,0 |
| Silicone surfactant | 1,5 |
| Catalyst I | |
| Stannous Octoate | 1,0 |
| Catalyst II | |
| Dimethylethanolamine | 0,3 |
| water | 0,1 |
| Abrasive particles | |
| 25 micron aluminum oxide | 80,0 |
| 25 micron silicon carbide | 60,0 |

EXAMPLE III

| Ingredient | Parts by Weight |
|---|---|
| Polyisocyanate | |
| Mondur MR (Mobay) | 50,0 |
| Conventional polyester polyol | 50,0 |
| Hydrophilic polyol | |

| | |
|---|---|
| PCPO300 (Union Carbide) | 20,0 |
| Surfactant | |
| L-5614 (Union Carbide) | 2,0 |
| Water | 0,2 |
| Catalyst I | |
| Dibutyltin Dilaurate | 1,2 |
| Catalyst II | |
| Ethylenediamine | 0,4 |
| 15 micron silicon carbide | 60,0 |
| 20 micron aluminum oxide | 40,0 |

EXAMPLE IV

| Ingredient | Parts by Weight |
|---|---|
| Polyisocyanate | 20,0 - 60,0 |
| Polyol | 0,0 - 50,0 |
| Hydrophilic polyol | 10,0 - 60,0 |
| Surfactant | 1,0 - 4,0 |
| water | 0,1 - 0,5 |
| Catalyst I | 0,5 - 2,0 |
| Catalyst II | 0,1 - 1,0 |
| Abrasive particles I | 20,0 - 70,0 |
| Abrasive particles II | 20,0 - 70,0 |

CLAIMS

1. A high open cell microporous rigid polyurethane abrasive grinding media having abrasive particles dispersed in a typical thermosetting resin binder composition and formed as a molded abrasive foam media, wherein the media composition includes 50 to 70 percent by weight of abrasive particles and 30 to 50 percent by weight of binder, said binder being characterized in that it comprises:

20 to 60 parts by weight of polyisocyanate having at least two reactive sites per chain and,

10 to 60 parts by weight of polyols having average molecular weight of 1000 to 4000, said polyols including at least one hydrophilic polyol in a concentration no less than 10 percent by weight of the polyol content and additives including surfactant, water and catalysts not exceeding in total 20 parts by weight.

2. The abrasive medial composition of claim 1, wherein said surfactant is silicone oxyethylene copolymers represented by the formula:

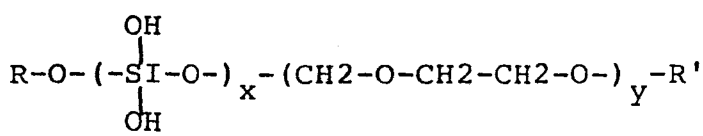

wherein R and R' are monovalent hydrocarbons and x is a positive integer preferably from 10 to 20 and y is a positive integer preferably from 2 to 10.

3. The abrasive media composition of claim 1 or 2, wherein said catalysts are the mixture of organo metal catalyst and amine based catalyst in a mix ratio respectively from 9 to 1 up to 7 to 3.

4. The abrasive media composition of claim 3, wherein the said organo metal catalyst is selected from stannous octoate, dibutyltin dilaurate, lead octoate, phenylmercuric propionate and zinc chlordie.

5. The abrasive media composition of claim 3 or 4, wherein the said amine based catalyst is selected from N-methylamine, dimethylethanolamine, N, N, N', N'-tetramethyl ethylenediamine, 1,4-diazabicyclo (2,2,2) octane, triethylamine, dimethylethanolamine and 2,4,6-tris (dimethylaminomethyl) phenol.

6. The abrasive media composition according to anyone of the preceding claims wherein said polyisocyanate has an average molecular weight of 500 to 1000 and contains at least two reactive -NCO sites.

7. The abrasive media composition according to anyone of the preceiding claims wherein said hydrophilic polyol is selected from the group consisting of polyethylene glycols or polycaprolactone polyol having a hygroscopicity value greater than 30.

8. An open cell microporous rigid polyurethane abrasive grinding media having a mixture of abrasive particles dispersed in a typical thermosetting resin binder composition applied as a molded abrasive foam, wherein the media composition includes 50 to 70 percent by weight of mixed abrasive particles and 30 to 50 percent by weight of binder and characterized in that it comprises:

20 to 60 parts by weight of polyisocyanate; 10 to 60 parts by weight of polyols, wherein at least one of said polyols are polyethylene glycols or polycaprolactone polyol having a hygroscopicity value greater than 30, the weight portions of polyisocyanate and polyols components being such that the equivalent weight ratio of NCO/OH is

between 1,05 and 1,2 and additives not exceeding 20 parts by weight.

9. The abrasive media composition of claim 8, wherein said mixture of abrasive particles includes aluminum oxide and silicon carbide wherein each constituent is present in a concentration no greater that 90 percent by weight.

10. The abrasive media composition of claim 8 or 9, wherein said additives include water, silicone surfactant and a mixture of catalysts.

11. The abrasive media composition of claim 10, wherein the catalysts comprising said mixture of catalysts are selected from the group consisting of organo metal and amine based catalysts.

12. An open cell microporous rigid polyurethane abrasive grinding media characterized in that it comprises 50 to 70 percent by weight of abrasive particles dispersed in a typical thermosetting polyurethane resin binder composition formed as a molded abrasive foam, said the abrasive foam has density range from 0,15 to 0,30 $gr/cm^3$10 to 30 pounds per cubic foot) with a greater than 80 percent open cell content.